# EUROPÄISCHE PATENTANMELDUNG

(11) **EP 0 855 664 A1**
(43) Veröffentlichungstag der Anmeldung: **29.07.1998**
(21) Anmeldenummer: 97100919.6
(22) Anmeldetag: 22.01.1997
(51) Int. Cl.: G06K 7/00, G06K 13/08

(54) **Lesegerät für Chip- oder SIM-Karten**

(71) Anmelder: Thomas & Betts GmbH, 63329 Egelsbach (DE)
(72) Erfinder: Lotz, Reinhard, Dipl.-Ing., 64390 Erzhausen (DE)
(74) Vertreter: Eyer, Eckhardt Philipp, Dipl.-Ing.

(57) **Zusammenfassung**

Lesegerät für Chip- oder SIM-Karten mit einem Gegen-Kontakte enthaltenden Chip und einem mittels eines Stellgliedes heb- und senkbar angeordneten, die Kontakte (1) enthaltenden Kontaktrahmen (2), der beim Einschub der Chipkarte aus einer abgehobenen Nullstellung gegen die Kraft einer Rückstellfeder in eine Gebrauchsstellung abgesenkt bzw. beim Ziehen der Chipkarte aus der Gebrauchsstellung wieder in die Nullstellung zurückgeführt wird, bei dem die Steuerung des Stellgliedes mittels zweier unabhängig voneinander einstellbarer bezw. regelbarer Steuerkreise erfolgt, von denen der eine Steuerkreis (I) den Abstand des Kontaktträgers (2) von dem Kartenchip und die Andruckkraft nach dem Aufsetzen und der andere Steuerkreis (II) die Annährungs-, Aufsetz- und Abhebbewegungen nach Zeitpunkt und Dauer bzw. Geschwindigkeit regeln. Das Stellglied ist von mindestens einem an einem kartenbetätigten Schieber (3) befestigten Federarm (4) gebildet, dessen Ende in einer Steuerkurve mit zwei der abgehobenen Nullstellung (8) und der Gebrauchsstellung (9) entsprechenden Endstellungen sowie zwei voneinander unabhängigen, der Auslenkung des Endes des Stellgliedes (4) dienenden Steuerflächen (I, II) geführt ist, von denen die eine Steuerfläche (1) den Abstand des Kontaktträgers (2) von dem Kartenchip sowie die Haltekraft und die andere Steuerfläche (II) der Steuerung der zeitlichen Abfolge der Annäherungs- und Rückführungsbewegungen dienen.

## Beschreibung

Die Erfindung geht aus von einem Lesegerät für Chipkarten gemäß dem Oberbegriff des Patentanspruches 1.

Lesegeräte der genannten Art haben inzwischen in größerem Umfang, insbesondere in bargeldlosen Telefon- und anderen Kommunikations-Geräten oder dergl., Eingang in die Technik gefunden. Es ist jedoch nach wie vor die Steuerung der Aufsetz- und Abhebbewegungen des Kontaktträgers auf dem Chip unbefriedigend gelöst im Hinblick darauf, daß einerseits zwar ein Aufsetzen der Kontakte auf dem Chip kurz vor Erreichen der Endstellung des Kartenschlittens und damit ein kurzes Schleifen wegen der damit verbundenen Reinigungswirkung erwünscht ist, der Schleifweg jedoch zur Verringerung des Abriebes so kurz wie möglich gehalten werden soll. Andererseits ist es erforderlich, den Andruck auf dem Rückweg über eine gewisse Mindeststrecke aufrecht zu erhalten. Dies hat seine Ursache darin, daß bei schnellem oder heftigem Einschub der Karte ein Rückfedern des Kartenschlittens nicht völlig vermeidbar ist, so daß bei zu kurzer Bemessung der Haltestrecke im Bereich der Gebrauchsstellung ein frühzeitiges Abheben des Kontaktträgers von dem Chip und damit eine unerwünschte Unterbrechung des Lesekontaktes bzw. Verringerung der Kontaktkraft eintreten würde. Beide Forderungen, nämlich die möglichst große Annäherung an die Endstellung vor Aufsetzen des Kontaktträgers auf dem Chip einerseits und die unveränderte Aufrechterhaltung des Kontaktes und der konstanten Kontaktkraft über eine längere Strecke des Rückweges andererseits, stehen in einem funktionellen Widerspruch zueinander, der mit den bekannten Geräten nicht gelöst werden kann.

Der vorliegenden Erfindung liegt als Aufgabe die Schaffung eines Lesegerätes für Chip- oder SIM-Karten zugrunde, mit dessen Hilfe die Annäherungs- und Rückführungsschritte unabhängig voneinander beliebig entsprechend den jeweiligen Bedürfnissen oder Anforderungen eingestellt bzw. geregelt werden können.

Diese Aufgabe wird mit einem Lesegerät mit den im Patentanspruch 1 wiedergegebenen Merkmalen gelost.

Durch die Erfindung ist ein Lesegerät für Chip- oder SIM-Karten der beschriebenen Art geschaffen, bei dem die Wegesteuerung, d.h. die Steuerung der linearen Annäherung des Kontaktträgers an den Chip von der Ablaufsteuerung, d.h. der Aufeinanderfolge der Annäherungs-, Aufsetz- und Löseschritte nach Zeitpunkt, Dauer und Geschwindigkeit, voneinander getrennt erfolgen. Auf diese Weise ergibt sich zunächst der Vorteil, daß die Annäherung des Kontaktträgers an den Chip unabhängig von der Stellung der Karte bezw. des Kartenschlittens auf ihrem Einschubweg, d.h. beliebig nach den jeweiligen technischen Anforderungen, festgelegt werden kann. Der wesentliche Vorteil ist jedoch darin zu sehen, daß durch die Trennung der Ablaufsteuerung von der Wegesteuerung bzw. Führung des Stellgliedes in einer Steuerkurve mit getrennten Zweigen für die Aufsetz- und Rückzugsbewegungen der Zeitpunkt und die Dauer des Aufsetzen der Karte auf dem Chip und sein Abheben unabhängig von allen sonstigen Einflüssen und unabhängig voneinander entsprechend den Anforderungen des Systems geregelt werden können.

Weitere Einzelheiten der in den Patentansprüchen gekennzeichneten Erfindung werden nachstehend anhand der beigefügten Zeichnung erläutert. Es zeigen
- Fig. 1: eine Sicht auf den Kartenschlitten mit Kontaktträger eines Chipkarten-Lesegerätes
- Fig. 2: eine Sicht auf die in Fig. 1 wiedergegebenen dreiecksförmigen Steuerkurven
- Fig. 3: einen Schnitt nach A - A durch Fig. 2
- Fig. 4: einen Schnitt nach B - B durch Fig. 2
- Fig. 5: einen Schnitt nach C - C durch Fig. 2
- Fig. 6: einen Schnitt nach D - D durch Fig. 2
- Fig. 7: eine Sicht auf eine Ausführungsform einer viereckförmigen Steuerkurve
- Fig. 8: einen Schnitt nach A - A durch Fig. 7
- Fig. 9: einen Schnitt nach B - B durch Fig. 7
- Fig. 10: einen Schnitt nach C - C durch Fig. 7

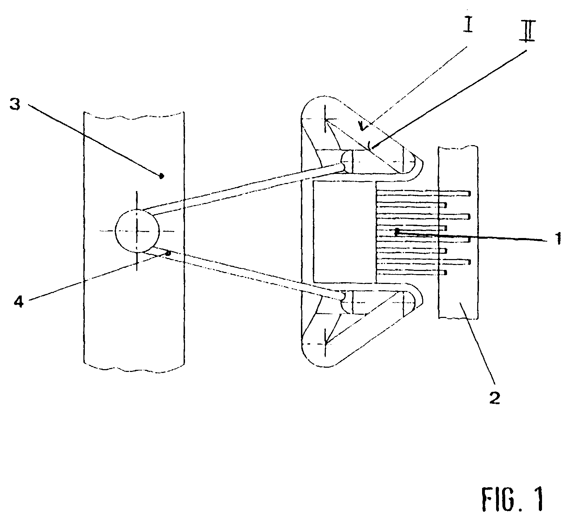

In Fig. 1 der Zeichnung ist der die Kontakte 1 haltende Kontaktträger 2 eines Chipkarten-Lesegerätes wiedergegeben, der beim Einschieben der Karte in den Kartenschlitz mittels eines Stellgliedes aus einer Nullstellung in eine Lesestellung auf dem die Gegenkontakte enthaltenden Chip abgesenkt bzw. beim Ziehen der Chipkarte aus der Lesestellung wieder in die Nullstellung zurückgeführt wird. Das Stellglied weist einen Kartenschlitten oder Schieber 3 auf, der einen Anschlag für die Chipkartenvorderkante als Mitnehmer 4 aufweist und derart auf den Kontaktträger wirkt, daß dieser beim Einschieben der Chipkarte in den Kartenschlitz mit seinen Kontakten auf den die Gegenkontakte enthaltenden Karten-Chip gedrückt und beim Ziehen der Karte wieder in seine Ausgangsstellung abgehoben wird.

Im Falle der in den Fig. 1 - 6 wiedergegebenen bevorzugten Ausführungsform besteht das Stellglied aus einer an dem Schieber 3 befestigten Federklammer mit zwei Armen 4, deren freie Enden in jeweils einer geschlossenen, im wesentlichen dreicksförmigen Steuerkurve zwischen zwei Endstellungen, nämlich einer (abgehobenen) Nullstellung 8 und einer Lesestellung 9, geführt ist, zwischen denen sich zwei Steuerungszweige erstrecken, von denen der eine Zweig die Aufsetzbewegung des Kontaktträgers 2 auf dem Chip steuert und einen eine Annäherung des Kontaktelementes an die Aufsetzstellung bei gleichzeitigem Aufbau einer Stellkraft im Federarm 4 bewirkenden Abschnitt 10, eine sich nahezu winkelrecht hieran anschließende Andruckzone 11 und einen der Rückführung des Federendes in seine Nullstellung 8 dienden Zweig mit den Abschnitten 12 und 14 enthält.

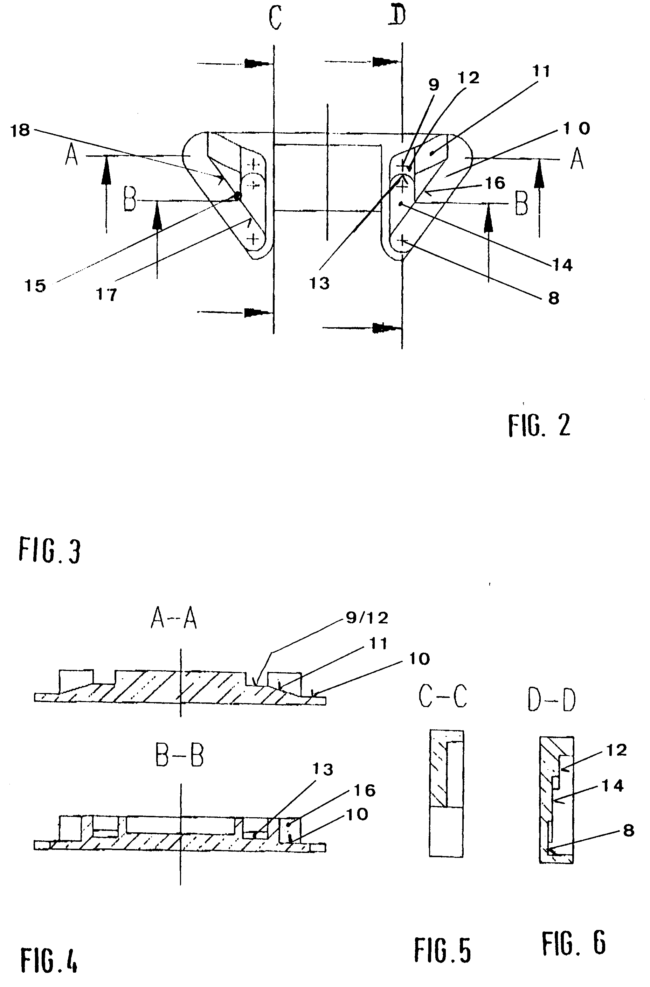

In Fig. 2 ist dieselbe Steuerkurve wie in Fig. 1 wiedergegeben mit jedoch unter anderem funktionellem Gesichtspunkt versehenen Bezugsziffern. Hierbei wird davon ausgegangen, daß die Steuerkurve zwei voneinander unabhängige Steuerflächen I, II aufweist, von denen sich die eine Steuerfläche I parallel zur Kartenebene erstreckt und den Abstand des Kontaktträgers 2 von dem Kartenchip sowie die Anpreßkraft bestimmt, während die andere Steuerfläche II der Steuerung der Annährungs-, Aufsetz- und Abhebbewegungen nach Zeitpunkt und Dauer bzw. Geschwindigkeit unter der Wirkung einer auf beliebige Weise, im Beispielsfalle mittels der Steuerfläche II selbst erzeugten Stellkraft dient. Aus dieser Zeichnung ist in Verbindung mit den Fig. 3 bis 6 erkennbar, daß die Steuerfläche I in dem der Annäherung des Kontaktelementes an die Aufsetzstellung dienenden Abschnitt 10 flach und in der sich hierzu im wesentlichen rechtwinkelig erstreckenden Andruckzone 11 steil ansteigt, wobei die Steuerfläche II im Bereich des Abschnittes 10 eine dem Aufbau einer Federquerspannung als Stellkraft dienende Auslenkfläche 16 enthält. Es ist weiterhin im Rückführungszweig der Steuerfläche I nach einem quasi eine Verlängerung der Lesestellung 9 bildenden Abschnitt 12 ein das sprunghafte Abheben des Kontaktträgers 2 vom Chip bewirkender Absatz 13 zur Rückführung des Stellgliedes 4 und damit des Kontaktträgers 2 in seine der Nullstellung 8 - zumindest im wesentlichen - entprechende Tiefstellung 14 vorgesehen. Es bedarf danach lediglich der Sicherstellung, daß das Federende unumkehrbar über den Totpunkt 15 der Steuerkurve hinweg in die Nullstellung überspringt, was in der im Ausführungsbeispiel wiedergegebenen Weise durch Anordnung eines weiteren tiefergelegenen Absatzes 17 in dem der Rückführung dienenden Zweig 12, 14 am Übergang zur Nullstellung 8 oder dadurch erfolgen kann, daß die seitliche Führungsfläche 18 des Abschnittes 14 als Auslenkungfläche für das Federende gestaltet ist, so daß es bei Erreichen des Totpunktes 15 zwischen den beiden Zweigen 12/14; 10/11 unter der Wirkung der hierdurch erzeugten Rücksprungkraft in die Nullstellung 8 zurückschnellt. In der dargestellten Ausführungsform geht die durch die Sprungkante 17 gebildete Fläche unmittelbar in die Auslenkfläche 16 über bzw. ist mit ihr identisch, sie können jedoch auch konstruktiv getrennt sein.

Der Steuerungsablauf mit Hilfe der in den Fig. 1 bis 6 wiedergegebenen Ausführungsform eines Chipkartenlesegerätes gestaltet sich wie folgt:

In der Nullstellung befinden sich die Enden der Feder 4 - siehe die Fig. 1 und 2 - in der tiefliegenden Stellung 8, wobei zur Benutzung des Lesers eine Chipkarte - bezogen auf die Zeichenebene - parallel zur Zeichenebene hinter dem Kontaktträger 2 von rechts eingeschoben wird bis zum Anschlag an einem nicht dargestellten, beispielsweise im Bereich des Elementes 4 angeordneten Mitnehmer. Beim weiteren Einschieben der Karte wird nunmehr der Schieber und damit die Federklammer 4 unter Aufgleiten ihrer Enden im Annäherungsabschnitt 10 mitgenommen, wobei durch den Absatz 17 das ungewollte Eintreten in den Abschnitt 14 verhindert wird. Das Aufgleiten in dem Abschnitt 10 erfolgt auf der in diesem Abschnitt leicht ansteigenden Steuerungsfläche I einerseits sowie an der Auslenkfläche 16 andererseits, wobei infolge der sich senkrecht zur Kartenebene erhöhenden Kraft einerseits eine Annäherung des Kontaktträgers 2 nahe an die Aufsitzstellung auf der Chipkarte heran erfolgt und andererseits infolge der Auslenkung an der Auslenkfläche 16 eine Federquerspannung aufgebaut wird, die bei Erreichen des Endes des Abschnittes 10 und Übertritt des Federendes in die Andruckzone 11 plötzlich frei wird ein sprunghaft plötzliches Aufgleiten auf der in diesem Abschnitt steil ansteigenden Führungsfläche bis zum Erreichen der hochliegenden Stellung 9 unter entsprechender Erhöhung der auf den Kontakttäger ausgeübten Kraft bewirkt. Der Kontaktträger wird damit fest auf den Kartenchip gedrückt, wobei durch die ebenengleiche Verlängerung der Steuerfläche I in diesem Punkt um den Abschnitt 12 auch bei unbeabsichtigtem Zurückziehen oder Rückfedern der Chipkarte eine sichere Halterung der Karte in der Lesestellung sichergestellt ist.

Die Rückführung des Lesers in die Nullstellung erfolgt durch Ziehen der Karte aus dem Geräteschlitz, wobei der Schieber 3 unter der Wirkung der (nicht dargestellten) Rückstellfeder oder einer entsprechenden Mechanik, z.B. Fixierung der Karte am Schieber (Haltefedern) zurückgedrückt wird bei gleichzeitigem Abgleiten des Endes der Feder 4 auf dem hochliegenden Abschnitt 12, an dessen Ende es sprunghaft in die Tieflage 14 abgleitet, womit gleichzeitig der Kontaktträger unter der Wirkung der (nicht dargestellten) Rückstellfeder oder Rückstellmechanik sprunghaft von dem Kartenchip abhebt. Bei der weiteren Rückführung des Kontaktträgers gelangt das Ende der Feder 4 an Ende des Abschnittes 14 in den Bereich des Totpunktes 15 und damit des Absatzes 17, über den hinweg sie in die Ausgangslage 8 zurückspringt.

In den Fig. 1 bis 6 ist die Erfindung anhand einer Ausführungsform mit im wesentlichen Dreieicksform aufweisender Steuerkurve mit aufeinander senkrecht stehenden Steuerflächen I und II dargestellt, in deren längster Seite die Steuerflächen 10, 16 des Annäherungsabschnittes liegen und deren kürzeste Seite die Andruckzone 11 bildet, während die dritte Dreiecksseite die Steuerflächen des Halte- und Rückführungsabschnittes 9, 12, 13, 14, 17 enthält. Es kann die Steuerkurve auch die Form eines Vierecks besitzen, in dessen einer Seite die Steuerflächen des Annäherungsabschnittes und in dessen sich im wesentlichen hierzu parallel erstreckender Seite die Steuerflächen des Rückführungsabschnittes liegen, während in der einen der beiden anderen Vierecksseiten die Steuerflächen des Andruckabschnittes liegen und die andere in seiner Gesamtheit den Übersprungpunkt zwischen Rückführungs- und Annäherungsabschnitt bildet.

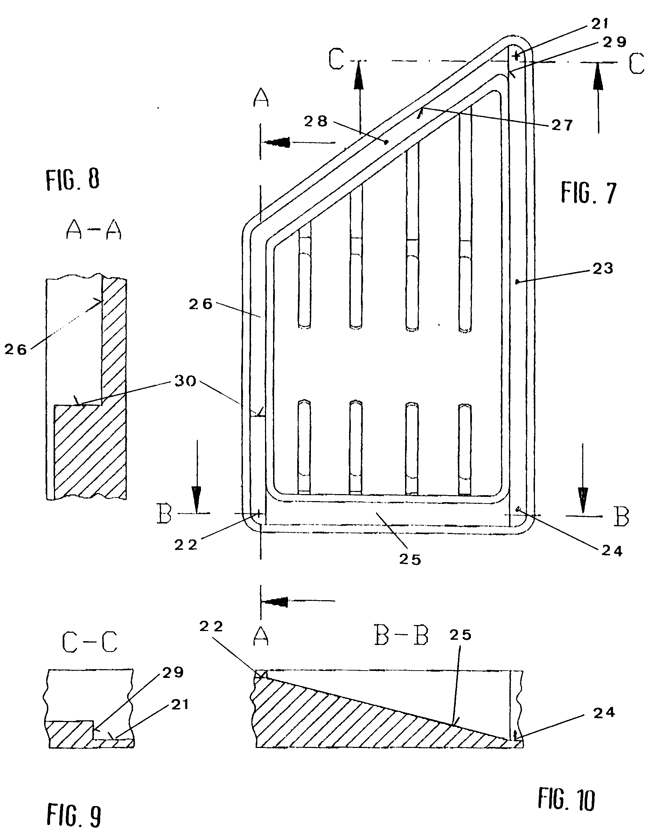

Die bevorzugte Ausführungsformen eines in dieser Weise ausgebildeten Lesegerätes ist in den Fig. 7 bis 10 wiedergegeben. Bei dieser Ausführungsform einer vierecksförmigen Steuerkurve liegt - in gegenüber der Ausführungsform der Fig. 1 bis 6 umgekehrter Kinematik - die Nullstellung im Punkt 21 und die Lesestellung im Punkt 22, wobei sich der Federarm in der Nullstellung 21 in einem in Querrichtung vorgespannten Zustand befindet. Im übrigen vollzieht sich der Ablauf in analoger Weise zu der in Fig. 1 bis 6 wiedergegebenen Ausführungsform derart, daß beim Einschub der Karte das Federarmende im Abschnitt 23 niveaugleich oder unter schwachem, eine Annäherung bewirkendem Anstieg bis zum Erreichen des Punktes 24 aufgleitet, wo es aufgrund seiner Vorspannung unter fester Anlage des Kontaktträgers auf dem Chip auf der steil ansteigenden Steuerfläche 25 der Andruckzone bis zum Punkt 22 aufgleitet. Der Haltepunkt 22 hat eine sich derart in den Rückführungszweig erstreckende Länge, daß bei unbeabsichtigtem Rückfedern der Karte eine feste Anlage des Kontaktträgers an der Karte sichergestellt ist. Beim Ziehen der Karte erfolgt zunächst nach Überwindung des Abschnittes 22 das Abheben durch Übersprung des Federendes an der Kante 30 in den Abschnitt 26 und nach - unter der Wirkung der nicht dargestellten Rückstellfeder - dessen Überwindung Abgleiten an der Steuerfläche 27 im Abschnitt 28 Rücksprung über die ein Rückgleiten verhindernde Kante 29 in die Ausgangsstellung 21. Hierbei wird durch die durch die Steuerfläche 27 bewirkte Auslenkung des Federarmes die ursprüngliche Querspannung aufgebaut. Im übrigen ist der Absprung 30 im dargestellten Beispiel als Sprungkante gestaltet, an deren Stelle jedoch auch eine Schrägfläche vorgesehen sein kann.

In entsprechender Weise sind eine Reihe weiterer Varianten einer Umlaufsteuerung mit vierecksförmiger Steuerkurve möglich, mit denen bei gegebenenfalls anderer Vorspannung der Federklammer sowie anderer Beaufschlagung des Kontaktrahmens eine andere Lage der Null- und Lesestellungen sowie der Abschnitte zur Annäherung, zum sprunghaften Aufsetzen des Kontaktträgers auf dem Chip sowie der Rückführung ohne Veränderung des beschriebenen kinematischen Ablaufes vorgesehen sind. Ebenso sind Steuerkurven möglich, in denen das Stellglied bei Aufrechterhaltung der funktionellen Trennung der Abstands- und Ablaufsteuerung in einer gemeinsamen Steuerkurve mit hin- und hergehender Bewegung geführt wird. Es sind weiterhin Ausführungsformen mit einer gemeinsamen Steuerkurve für beide Steuerflächen möglich, die in einer seitlich des Kontaktträgers liegenden (vertikalen) Ebene oder in einer beim Karteneinschub in Drehung versetzten Welle ausgebildet ist.

## Patentansprüche

1. Lesegerät für Chip- oder SIM-Karten mit einem Gegen-Kontakte enthaltenden Chip und einem mittels eines Stellgliedes heb- und senkbar angeordneten, die Kontakte (1) enthaltenden Kontaktrahmen (2), der beim Einschub der Chipkarte aus einer abgehobenen Nullstellung gegen eine Rückstellkraft in eine Gebrauchsstellung abgesenkt bzw. beim Ziehen der Chipkarte aus der Gebrauchsstellung wieder in die Nullstellung zurückgeführt wird, dadurch gekennzeichnet, daß die Steuerung des Stellgliedes mittels zweier unabhängig voneinander einstellbarer bezw. regelbarer Steuerkreise (I, II) erfolgt, von denen der eine Steuerkreis (I) der Steuerung des Abstandes des Kontaktträgers (2) von dem Kartenchip und der Andruckkraft nach dem Aufsetzen und der andere Steuerkreis (II) der Steuerung der Annährungs-, Aufsetz- und Abhebbewegungen nach Zeitpunkt und Dauer bzw. Geschwindigkeit dienen.

2. Lesegerät für Chipkarten nach Anspruch 1, dadurch gekennzeichnet, daß das Stellglied von mindestens einem an einem kartenbetätigten Schieber (3) befestigten Federarm (4) oder kartenbetätigten Hebel gebildet ist, dessen Ende in einer geschlossenen Steuerkurve mit zwei der abgehobenen Nullstellung (8) und der Gebrauchsstellung (9) entsprechenden Endstellungen sowie zwei voneinander unabhängigen, der Auslenkung des Endes des Stellgliedes (4) dienenden Steuerflächen (I, II) geführt ist, von denen die eine Steuerfläche (1) den Abstand des Kontaktträgers (2) von dem Kartenchip sowie die Haltekraft und die andere Steuerfläche (II) der Steuerung der Annährungs-, Aufsetz- und Abhebbewegungen nach Zeitpunkt und Dauer bzw. Geschwindigkeit unter der Wirkung einer mittels der Steuerfläche erzeugten Stellkraft dienen.

3. Lesegerät für Chipkarten nach Anspruch 2, dadurch gekennzeichnet, daß die Steuerkurve zwei sich zwischen den Endstellungen (8, 9) erstreckende Zweige enthält, von denen der eine, die Aufsetzbewegung des Kontaktträgers auf dem Chip steuernde Zweig einen eine Annäherung des Kontaktelementes an die Aufsetzstellung bei gleichzeitigem Aufbau einer Stellkraft im Stellglied bewirkenden Abschnitt (10) und einen sich hieran anschließenden Abschnitt (11) enthält, auf dem benutzerunabhängig unter der Wirkung der Stellkraft bei geringer Kartenbewegung eine sprunghafte Erhöhung der Haltekraft erfolgt, während der die Rückführung in die Nullstellung bewirkende Zweig einen ersten Abschnitt (12) mit gegenüber der Lesestellung unveränderter Haltekraft sowie einen Abschnitt (14) enthält, auf dem das Stellglied (4) nach sprunghafter Verringerung der Haltekraft über den Totpunkt (15) zwischen den beiden Zweigen (12/14; 10/11) hinweg sprunghaft in die Nullstellung (8) zurückgeführt wird.

4. Lesegerät für Chipkarten nach einem der Ansprüche 2 oder 3, dadurch gekennzeichnet, daß sich die der Abstandssteuerung dienende Steuerfläche (I) ebenenparallel zur Einschubebene der Chipkarte erstreckt und im Bereich des Annäherungsabschnittes (10) flach und in der sich hierzu im wesentlichen rechtwinkelig erstreckenden Andruckzone (11) steil ansteigt, während im Rückführungszweig, nach einem verlängerten, die Lage des Stellgliedes unverändert in der Lesestellung (9) haltenden Abschnitt (12) ein das sprunghafte Abheben des Kontaktträgers (2) vom Chip bewirkender Absatz (13) zur Rückführung des Stellgliedes (4) in seine Tiefstellung (14) vorgesehen ist.

5. Lesegerät für Chipkarten nach einem der Ansprüche 3 oder 4, dadurch gekennzeichnet, daß sich die der Ablaufsteuerung dienende Steuerfläche (II) senkrecht zu der der Abstandssteuerung dienenden Steuerfläche (I) erstreckt und im Bereich des Annäherungsabschnittes (10) eine dem Aufbau einer Federquerspannung als Stellkraft dienende Auslenkfläche (16) enthält.

6. Lesegerät für Chipkarten nach einem der Ansprüche 2 bis 5, dadurch gekennzeichnet, daß in dem der Rückführung dienenden Zweig (12, 14) am Übergang zur Nullstellung (8) ein Absatz (17) vorgesehen ist, der ein Rückgleiten des Stellgliedes (4) in den Rückführungszweig (14) verhindert.

7. Lesegerät für Chipkarten nach einem der Ansprüche 2 bis 5, dadurch gekennzeichnet, daß in dem der Rückführung dienenden Zweig (12, 14) eine die seitliche Auslenkung des Stellgliedes (4) bewirkende Steuerfläche vorgesehen ist, so daß es bei Erreichen des Totpunktes (15) zwischen den beiden Zweigen (12/14; 10/11) unter der Wirkung der hierdurch erzeugten Stellkraft in die Nullstellung (8) zurückschnellt.

8. Lesegerät für Chipkarten nach einem der Ansprüche 1 bis 7, dadurch gekennzeichnet, daß in der Andruckzone (11) zum Zwecke der Einstellung der Länge der Schleifstrecke beim Karteneinschub eine vertikale, vom Ende der Feder (4) betätigte Steuerfläche vorgesehen ist.

9. Lesegerät für Chipkarten nach einem der Ansprüche 1 bis 8, dadurch gekennzeichnet, daß die Steuerkurve die Form eines Dreiecks besitzt, in dessen längster Seite die Steuerflächen (11, 21) des Annäherungsabschnittes liegen und dessen kürzeste Seite die Andruckzone (17) bildet, während die dritte Dreiecksseite die Steuerflächen des Halte- und Rückführungsabschnittes (18, 19, 20, 21, 22, 23) enthält.

10. Lesegerät für Chipkarten nach einem der Ansprüche 1 bis 8, dadurch gekennzeichnet, daß die Steuerkurve die Form eines Vierecks besitzt, in dessen einer Seite die Steuerflächen des Annäherungsabschnittes und in dessen sich im wesentlichen hierzu parallel erstreckender Seite die Steuerflächen des Rückführungsabschnittes liegen, während in der einen der beiden anderen Vierecksseiten die Steuerflächen des Andruckabschnittes liegen und die andere in seiner Gesamtheit den Übersprungpunkt zwischen Rückführungs- und Annäherungsabschnitt bildet.

11. Lesegerät nach Anspruch 10, dadurch gekennzeichnet, daß die die Querspannung des Federarmes (4) erzeugende Steuerfläche im Rückführungszweig vor dem Übergang in die Nullstellung (21) ausgebildet ist.
